# EUROPÄISCHE PATENTSCHRIFT

(11) **EP 3 257 145 B1**
(45) Veröffentlichungstag und Bekanntmachung des Hinweises auf die Patenterteilung: **08.08.2018**
(21) Anmeldenummer: 16704665.5
(22) Anmeldetag: 17.02.2016
(51) Int. Cl.: H02M 3/155, H02M 1/10

(54) **DC/DC-WANDLER MIT FLIEGENDEM KONDENSATOR**
DC/DC CONVERTER WITH A FLYING CAPACITOR
CONVERTISSEUR CC/CC AVEC CONDENSATEUR FLOTTANT

(30) Priorität: 10.03.2015 DE 102015103490
(43) Veröffentlichungstag der Anmeldung: 20.12.2017
(73) Patentinhaber: SMA Solar Technology AG, 34266 Niestetal (DE)
(72) Erfinder: MUELLER, Burkard, 34123 Kassel (DE)
(74) Vertreter: Lahnor, Peter
(86) Internationale Anmeldenummer: PCT/EP2016/053338
(87) Internationale Veröffentlichungsnummer: WO 2016/142137

(56) Entgegenhaltungen:
- WO-A2-2010/047422
- WO-A2-2014/056668
- US-A1- 2014 339 898

## Beschreibung

### TECHNISCHES GEBIET DER ERFINDUNG

Die Erfindung bezieht sich auf einen DC/DC-Wandler mit einem von einem ersten und einem zweiten Hochspannungsanschlusspunkt gebildeten Hochspannungsanschluss für eine Hochgleichspannung, wobei ein aktiv ansteuerbares Schaltelement, ein Kondensator und ein weiteres Schaltelement zwischen dem ersten und dem zweiten Hochspannungsanschlusspunkt in Reihe geschaltet sind und wobei der Kondensator zwischen zwei Niederspannungsanschlusspunkte geschaltet ist, an denen zwei unterschiedliche Eingangsgleichspannungen anliegen. Weiterhin bezieht sich die Erfindung auf Wechselrichter und andere elektrische Schaltungen mit einem solchen DC/DC-Wandler.

### STAND DER TECHNIK

Es sind DC/DC-Wandler mit sogenanntem fliegendem Kondensator bekannt. Bei solchen DC/DC-Wandlern, wie sie beispielsweise aus der US 2013/0119961 A1 hervorgehen, sind ein aktiv ansteuerbares Schaltelement, ein Kondensator und ein weiteres Schaltelement zwischen zwei einen Ausgang für eine Ausgangsgleichspannung ausbildenden Ausgangsanschlusspunkten in Reihe geschaltet. Dabei ist dem Kondensator eine Halbbrücke aus einem aktiv ansteuerbaren Halbbrückenschaltelement und einem weiteren Halbbrückenschaltelement parallel geschaltet. Der Mittelpunkt der Halbbrücke ist über eine Eingangsdrossel an einen Eingang für eine Eingangsgleichspannung angeschlossen. Das aktiv ansteuerbare Schaltelement und das aktiv ansteuerbare Brückenschaltelement werden so nacheinander angesteuert, dass der Kondensator zunächst über die Eingangsdrossel auf die Eingangsgleichspannung aufgeladen wird und dann der aufgeladene Kondensator mit der Eingangsdrossel in Reihe geschaltet wird. Dabei springt das elektrische Potential des Kondensators, d. h. seiner Elektroden, worauf die Bezeichnung als fliegender Kondensator zurückgeht. Bei den beschriebenen bekannten DC/DC-Wandlern mit fliegendem Kondensator kann zudem die Eingangsdrossel als Hochsetzstellerdrossel zum Hochsetzen der Eingangsgleichspannung verwendet werden, indem das aktiv ansteuerbare Schaltelement und das aktiv ansteuerbare Brückenschaltelement synchron angesteuert werden.

Aus dem springenden elektrischen Potential des Kondensators resultieren Einschränkungen bei den Verwendungsmöglichkeiten eines DC/DC-Wandlers mit fliegendem Kondensator.

Aus der DE 10 2011 085 559 A1 ist ein DC/DC-Wandler bekannt, der eine Parallelschaltung eines Kondensators mit mindestens einem Steller aufweist. Jeder Steller umfasst eine dem Kondensator parallel geschaltete Halbbrücke aus zwei aktiv ansteuerbaren Brückenschaltelementen. An den Mittelpunkt der Halbbrücke ist eine Eingangsdrossel angeschlossen. Weiterhin ist dem Kondensator eine zusätzliche Halbbrücke aus zwei aktiv ansteuerbaren Brückenschaltelementen parallel geschaltet, an deren Mittelpunkt eine Ausgangsdrossel angeschlossen ist. Zudem ist der Kondensator mit einem Stützkondensator in Reihe geschaltet. An jede Eingangsdrossel des bekannten DC/DC-Wandlers kann eine Gleichspannungsquelle angeschlossen werden, wobei sich die an verschiedenen Eingangsdrosseln anliegenden Eingangsgleichspannungen unterscheiden können. Eine Ausgangsgleichspannung wird an der Ausgangsdrossel ausgegeben. Dabei liegen die Eingangsgleichspannungen und die Ausgangsgleichspannung gegenüber einer Verbindungsleitung an, an die der Stützkondensator angeschlossen ist. Durch Ergänzung einer weiteren Halbbrücke mit einer weiteren Eingangsdrossel kann eine weitere Gleichspannungsquelle angeschlossen werden. Durch die Reihenschaltung des Kondensators mit dem weiteren Kondensator müssen jeweils nur die Anteile der Eingangsgleichspannungen gewandelt werden, welche unterschiedlich sind; und die aktiv ansteuerbaren Brückenschaltelemente müssen nur für den Teil der Eingangsgleichspannungen ausgelegt sein, der gewandelt wird. Um jedoch die Spannung an dem Stützkondensator konstant zu halten, muss die Ausgangsgleichspannung des bekannten DC/DC-Wandlers immer ein gewichteter Mittelwert der Eingangsgleichspannungen sein. Um den bekannten DC/DC-Wandler an einen Zwischenkreis höherer Zwischenkreisspannung anzuschließen, ist daher ein zusätzlicher Hochsetzsteller vorzusehen, dessen Bauteile für die volle Zwischenkreisspannung und die gesamte über den DC/DC-Wandler fließende Leistung ausgelegt sein müssen.

Aus "Veerachary, M.: Two- Loop Controlled Buck-SEPIC Converter for Input Source Power Management. In: Industrial Electronics, IEEE Transactions on (Volume:59, Issue:11), 04 November 2011, 4075-4087" ist eine Wandlertopologie bekannt, die einen Tiefsetzsteller für eine Spannungsquelle höherer Spannung mit einem SEPIC-Wandler für eine davon getrennte Spannungsquelle niedrigerer Spannung kombiniert. Die Ausgänge des Tiefsetzstellers und des SEPIC-Wandlers sind miteinander verbunden, wobei die Stellerdrossel des Tiefsetzstellers an die Eingangsseite der ausgangsseitigen Diode des SEPIC-Wandlers angeschlossen ist.

"Gules, R. et. al.: A modified SEPIC converter with high static gain for renewable applications. In: Power Electronics Conference (COBEP), 2011 Brazilian, 11-15 Sept. 2011, 162-167" offenbaren einen modifizierten SEPIC-Wandler mit einer zusätzlichen Diode und einem zusätzlichen Kondensator im Vergleich zu einem klassischen SEPIC- Wandler. Dabei ist der Kondensator mit der zweiten Drossel des SEPIC-Wandlers in Reihe geschaltet, und die Diode verbindet einen Knoten zwischen der ersten Drossel und dem Schalter mit einem Knoten zwischen der zweiten Drossel und dem zusätzlichen Kondensator des SEPIC-Wandlers.

Aus der DE 10 2009 052 461 A1 ist ein Tiefsetzsteller bekannt, um einen geteilten Gleichspannungszwischenkreis aus einem Photovoltaikgenerator aufzuladen. Dabei weist der Tiefsetzsteller einen Tiefsetzstellerschalter, zwei Tiefsetzstellerdioden und zwei gekoppelte Tiefsetzstellerdrosseln auf. Jeweils eine der Tiefsetzstellerdioden und eine der Tiefsetzstellerdrosseln ist einem von zwei in Reihe geschalteten Kondensatoren des geteilten Gleichspannungszwischenkreises parallel geschaltet. Aus US2014/0339898 A1 ist ein DC/DC Wandler bekannt, der für mehrere Eingangsgleichspannungen von mehreren Gleichspannungsquellen geeignet ist.

### AUFGABE DER ERFINDUNG

Der Erfindung liegt die Aufgabe zugrunde, einen DC/DC-Wandler aufzuzeigen, der für mehrere Eingangsgleichspannungen von mehreren Gleichspannungsquellen geeignet ist und dessen Schaltelemente dennoch nicht mit seiner vollen Ausgangsgleichspannung belastet werden.

### LÖSUNG

Die Aufgabe der Erfindung wird durch einen DC/DC-Wandler mit den Merkmalen des unabhängigen Patentanspruchs 1 gelöst. Bevorzugte Ausführungsformen des erfindungsgemäßen DC/DC-Wandlers sind in den abhängigen Patentansprüchen 2 bis 7 definiert. Die weiteren abhängigen Patentansprüche betreffen Wechselrichter und andere elektrische Schaltungen mit dem erfindungsgemäßen DC/DC-Wandler.

### BESCHREIBUNG DER ERFINDUNG

Bei einem erfindungsgemäßen DC/DC-Wandler mit einem ersten, einem zweiten und einem dritten Niederspannungsanschlusspunkt sowie einem ersten und einem zweiten Hochspannungsanschlusspunkt, wobei der erste und der zweite Niederspannungsanschlusspunkt einen ersten Niederspannungsanschluss für eine erste Niedergleichspannung und der erste und der dritte Niederspannungsanschlusspunkt einen zweiten Niederspannungsanschluss für eine zweite Niedergleichspannung bilden, wobei der erste und der zweite Hochspannungsanschlusspunkt einen Hochspannungsanschluss für eine Hochgleichspannung bilden, wobei der erste Niederspannungsanschlusspunkt und der erste Hochspannungsanschlusspunkt direkt miteinander verbunden sind, wobei ein aktiv ansteuerbares Schaltelement, ein Kondensator und ein weiteres Schaltelement zwischen dem ersten und dem zweiten Hochspannungsanschlusspunkt in Reihe geschaltet sind und wobei der Kondensator zwischen den zweiten und den dritten Niederspannungsanschlusspunkt geschaltet ist, ist eine weitere Kapazität, insbesondere ein weiterer Kondensator, direkt zwischen den zweiten Niederspannungsanschlusspunkt und den dritten Niederspannungsanschlusspunkt geschaltet und ist die weitere Kapazität durch zwei Drosseln beidpolig von dem Kondensator entkoppelt. Das heißt, die Drosseln liegen jeweils zwischen dem zweiten bzw. dem dritten Niederspannungsanschlusspunkt einerseits und einer der beiden Elektroden des Kondensators andererseits. Potentialsprünge des Kondensators beim aktiven Ansteuern des aktiv ansteuerbaren Schaltelements werden so nicht unmittelbar auf die weitere Kapazität und den zweiten und dritten Niederspannungsanschlusspunkt und entsprechend auch nicht auf den ersten und zweiten Niederspannungsanschluss übertragen. So wirken sich diese Potentialsprünge auch nicht auf an diese Eingänge angeschlossene Gleichspannungsquellen aus. Dies vereinfacht insbesondere den parallelen Anschluss einer größeren Zahl von Gleichspannungsquellen an die Niederspannungsanschlüsse, wie noch näher dargelegt werden wird. Durch Ansteuern des aktiv ansteuerbaren Schaltelements, das mit dem Kondensator in Reihe geschaltet ist, wird bei dem neuen DC/DC-Wandler die Hochgleichspannung gegenüber den Niedergleichspannungen eingestellt, wobei die Hochgleichspannung auch höher als die mittlere Niedergleichspannung eingestellt werden kann.

Soweit hier davon die Rede ist, dass der erste Niederspannungsanschlusspunkt und der erste Hochspannungsanschlusspunkt direkt miteinander verbunden sind und dass die weitere Kapazität direkt zwischen den zweiten Niederspannungsanschlusspunkt und den dritten Niederspannungsanschlusspunkt geschaltet ist, und auch in entsprechenden Zusammenhängen bedeutet "direkt" eine oder mehrere elektrisch leitende galvanische Verbindungen, in denen keine elektrischen oder elektronischen Bauteile angeordneten sind, die den Stromfluss über die Verbindungen wesentlich beeinflussen. Dies schließt jedoch das Vorhandensein kleiner Widerstände, Induktivitäten oder Kapazitäten in bzw. an den Verbindungen nicht aus.

Die beiden Drosseln, die die weitere Kapazität von dem Kondensator entkoppeln, können nach Art einer stromkompensierten Drossel, die auch als Gleichtaktdrossel oder Common Mode Choke bezeichnet wird, magnetisch gekoppelt sein. Die gekoppelte Drossel des erfindungsgemäßen DC/DC-Wandlers weist dann für Gleichtaktströme eine hohe Induktivität, für Gegentaktströme eine geringe Induktivität auf. Mit ihrer hohen Induktivität für Gleichtaktsignale entkoppeln die magnetisch gekoppelten Drosseln den weiteren Kondensator und damit auch den zweiten und dritten Niederspannungsanschlusspunkt insbesondere von Potentialsprüngen des mit den Schaltelementen in Reihe geschalteten Kondensators. Ihre geringe Induktivität für Gegentaktsignale stellt hingegen ein schnelles Wiederaufladen des Kondensators aus der weiteren Kapazität sicher. Verglichen mit einer üblichen stromkompensierten Drossel ist die Energiespeicherfähigkeit der beiden magnetisch gekoppelten Drosseln vorzugsweise deutlich größer. Sie entsprechen damit vom Aufbau gekoppelten Sinusfilterdrosseln zwischen der weiteren Kapazität und dem Kondensator, wobei aber eine der beiden Drosseln "verpolt" angeschlossen ist.

Wenn in der Beschreibung des erfindungsgemäßen DC/DC-Wandlers von Niederspannungsanschlusspunkten oder Hochspannungsanschlusspunkten die Rede ist, so bedeutet dies nicht notwendigerweise, dass der DC/DC-Wandler an diesen Niederspannungs- bzw. Hochspannungsanschlusspunkten endet und dass beispielsweise Gleichspannungsquellen direkt an diese Anschlusspunkte angeschlossen werden müssten. Vielmehr kann der DC/DC-Wandler auch vor den Niederspannungsanschlusspunkten und hinter den Hochspannungsanschlusspunkten liegende Bestandteile aufweisen. Zwischen den Niederspannungsanschlusspunkten und den Hochspannungsanschlusspunkten liegen jedoch im Betrieb des DC/DC-Wandlers Niedergleichspannungen bzw. eine Hochgleichspannung an. Dabei können die Niedergleichspannungen direkt oder indirekt, d. h. unter Zwischenschaltung von Stellern, von einer oder mehreren Gleichspannungsquellen bereitgestellt werden. Ebenso kann die Hochgleichspannung direkt oder indirekt, d. h. unter Zwischenschaltung von weiteren Stellern, genutzt werden.

Bei dem erfindungsgemäßen DC/DC-Wandler kann zwischen den ersten Niederspannungsanschlusspunkt und den zweiten und/oder den dritten Niederspannungsanschlusspunkt ein Stützkondensator geschaltet sein, der damit zwischen dem ersten Niederspannungsanschlusspunkt und dem dritten Niederspannungsanschlusspunkt mit der weiteren Kapazität direkt in Reihe geschaltet ist. Die Reihenschaltung des Stützkondensators mit der weiteren Kapazität bildet zusammen mit den Drosseln ein LC-Filter, das die Potenzialsprünge des Kondensators herausfiltert, so dass die Niedergleichspannungen an den Niederspannungsanschlusspunkten stabil bleiben. Alternativ oder zusätzlich kann ein Stützkondensator zwischen den ersten Niederspannungsanschlusspunkt und den dritten Niederspannungsanschlusspunkt geschaltet sein.

Parallel zu der Reihenschaltung des aktiv ansteuerbaren Schaltelements, des Kondensators und des weiteren Schaltelements kann bei dem erfindungsgemäßen DC/DC-Wandler ein Zwischenkreiskondensator zwischen den ersten Hochspannungsanschlusspunkt und den zweiten Hochspannungsanschlusspunkt geschaltet sein. An diesem Zwischenkreiskondensator fällt dann die Hochgleichspannung ab, und der Zwischenkreiskondensator stabilisiert die Spannung über die Pulse hinweg, mit denen das mit dem Kondensator in Reihe geschaltete aktiv ansteuerbare Schaltelement zum Stellen der Hochgleichspannung angesteuert wird.

Bei einer den erfindungsgemäßen DC/DC-Wandler umfassenden elektrischen Schaltung kann an den ersten Niederspannungsanschluss und/oder den zweiten Niederspannungsanschluss jeweils eine Gleichspannungsquelle direkt angeschlossen sein, die die erste bzw. die zweite Niedergleichspannung bereitstellt. Diese Gleichspannungsquellen können z. B. PV-Generatoren oder Speicher für elektrische Energie wie Batterien oder Kondensatoren sein. Die Differenz der beiden Niedergleichspannungen, die zum Laden des weiteren Kondensators und des Kondensators genutzt wird, wird dann direkt durch die beiden Gleichspannungsquellen vorgegeben.

Eine größere Flexibilität wird erreicht, wenn zwischen den zweiten Niederspannungsanschlusspunkt und den dritten Niederspannungsanschlusspunkt mindestens eine Halbbrücke aus einem aktiv ansteuerbaren Brückenschaltelement und einem weiteren Brückenschaltelement geschaltet ist, wobei ein Mittelpunkt der Halbbrücke über eine Eingangsdrossel an einen weiteren Niederspannungsanschlusspunkt angeschlossen ist, der zusammen mit dem ersten Niederspannungsanschlusspunkt einen weiteren Niederspannungsanschluss zum Anschluss einer weiteren Gleichspannungsquelle bildet. Hierbei bedeutet die Bezeichnung der Gleichspannungsquelle als "weitere" Gleichspannungsquelle aber nur, dass sie über die beschriebene Halbbrücke angeschlossen ist. Neben der weiteren Gleichspannungsquelle oder auch mehreren solcher weiteren Gleichspannungsquellen müssen keine direkt an den ersten Niederspannungsanschluss oder den zweiten Niederspannungsanschluss angeschlossene Gleichspannungsquellen vorgesehen sein. Umgekehrt kann neben einer oder mehreren weiteren Gleichspannungsquellen, die jeweils über eine Halbbrücke an den zweiten und dritten Niederspannungsanschlusspunkt angeschlossen sind und die insoweit sowohl zur Bereitstellung der ersten als auch der zweiten Niedergleichspannung herangezogen werden können, eine Gleichspannungsquelle vorgesehen sein, die direkt an den einen oder den anderen Niederspannungsanschluss angeschlossen ist.

In der Ausführungsform mit einer Halbbrücke entspricht der erfindungsgemäße DC/DC-Wandler einem DC/DC-Wandler mit fliegendem Kondensator, wobei der fliegende Kondensator in den ausgangsseitigen Kondensator und die eingangsseitige weitere Kapazität aufgeteilt ist, die durch die Drosseln voneinander entkoppelt sind.

Wenn die weitere Gleichspannungsquelle ein Photovoltaikgenerator oder ein anderer reiner Generator ist, kann das weitere Brückenschaltelement der jeweiligen Halbbrücke eine Diode sein. Wenn die weitere Gleichspannungsquelle jedoch eine Batterie oder ein anderer Speicher für elektrische Energie ist, der sowohl entladen als auch aufgeladen werden soll, ist die jeweilige Halbbrücke bidirektional auszubilden. Dazu muss das weitere Brückenschaltelement aktiv ansteuerbar sein, so dass mit der Halbbrücke eine solche Spannungsdifferenz zwischen dem weiteren Niederspannungsanschlusspunkt und dem ersten Niederspannungsanschlusspunkt hervorgerufen werden kann, die zu dem gewünschten Strom in Lade- bzw. Entladerichtung des Speichers für elektrische Energie führt.

Wenn das mit dem Kondensator in Reihe geschaltete weitere Schaltelement aktiv ansteuerbar ist, kann der erfindungsgemäße DC/DC-Wandler zwischen seinen ersten, zweiten und dritten Niederspannungsanschlusspunkten einerseits und seinen ersten und zweiten Hochspannungsanschlusspunkten andererseits bidirektional betrieben werden. Dann kann ein als Gleichspannungsquelle oder weitere Gleichspannungsquelle angeschlossener Speicher für elektrische Energie über den Kondensator aus einem Zwischenkreis am Hochspannungsanschluss des DC/DC-Wandlers aufgeladen werden. Auch generell muss die Energie nicht von den Niederspannungsanschlusspunkten zu den Hochspannungsanschlusspunkten fließen, vielmehr kann der erfindungsgemäße DC/DC-Wandler durch Wahl geeigneter Schaltelemente für einen umgekehrten oder sogar wechselnden (bidirektionalen) Energiefluss ertüchtigt werden.

Insbesondere können bei dem erfindungsgemäßen DC/DC-Wandler zwischen dem zweiten Niederspannungsanschlusspunkt und dem dritten Niederspannungsanschlusspunkt mindestens zwei Halbbrücken aus jeweils einem aktiv ansteuerbaren Brückenschaltelement und einem weiteren Brückenschaltelement parallel geschaltet sein, wobei der Mittelpunkt der jeweiligen Halbbrücke über eine Eingangsdrossel an jeweils einen weiteren Niederspannungsanschlusspunkt angeschlossen ist, der zusammen mit dem ersten Niederspannungsanschlusspunkt jeweils einen weiteren Niederspannungsanschluss zum Anschluss jeweils einer weiteren Gleichspannungsquelle bildet. Wenn die beiden weiteren Gleichspannungsquellen unterschiedliche Photovoltaikgeneratoren sind, wobei unterschiedlich hier auch eine unterschiedliche Ausrichtung der jeweiligen Photovoltaikmodule oder auch nur kleine Variationen zwischen den Photovoltaikgeneratoren abdeckt, kann durch entsprechende Ansteuerung der aktiv ansteuerbaren Brückenschaltelemente ein separates MPP-Tracking für jeden der Photovoltaikgeneratoren durchgeführt werden. Das heißt, durch unterschiedliches Hochsetzen der Spannung der Photovoltaikgeneratoren werden unterschiedliche Betriebspunkte der Photovoltaikgeneratoren eingestellt, in denen der jeweilige Photovoltaikgenerator seine maximale Leistung erbringt.

Die weiteren Gleichspannungsquellen können neben einem oder mehreren Photovoltaikgeneratoren auch eine Batterie umfassen. Diese Batterie kann dann direkt aus dem oder den Photovoltaikgenerator(en) geladen werden. Dieses Laden der Batterie kann durch Ansteuerung der aktiv ansteuerbaren Schaltelemente ihrer Halbbrücke unabhängig von einem MPP-Tracking der einzelnen Photovoltaikgeneratoren erfolgen, weil die das Laden der Batterie treibende Spannung einstellbar ist.

Es versteht sich, dass der Kondensator, die weitere Kapazität, jeder Stützkondensator und jeder Zwischenkreiskondensator des erfindungsgemäßen DC/DC-Wandlers unabhängig voneinander eine Reihen- und/oder Parallelschaltung von mehreren Einzelkondensatoren umfassen kann.

Möglich ist weiterhin die Verwendung einer Batterie oder eines anderen Speichers für elektrische Energie zur Ausbildung der weiteren Kapazität, und zwar parallel zu oder anstelle eines weiteren Kondensators.

Ein zusätzlicher Niederspannungsanschlusspunkt des erfindungsgemäßen DC/DC-Wandlers kann direkt mit dem zweiten Hochspannungsanschlusspunkt verbunden sein. Dieser zusätzliche Niederspannungsanschlusspunkt bildet zusammen mit dem zweiten, dem dritten oder einem weiteren Niederspannungsanschlusspunkt einen dritten, einen vierten oder noch einen weiteren Niederspannungsanschluss aus, an den ebenfalls eine Gleichspannungsquelle angeschlossen werden kann. Diese Gleichspannungsquelle hat dann ein anderes Bezugspotential als jede Gleichspannungsquelle, die an den ersten Niederspannungsanschlusspunkt angeschlossen ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kondensator die Rede ist, ist dies so zu verstehen, dass genau ein Kondensator, zwei Kondensatoren oder mehr Kondensatoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter Ausführungsbeispiele weiter erläutert und beschrieben.
- **Fig. 1**: zeigt eine erste Ausführungsform des erfindungsgemäßen DC/DC-Wandlers.
- **Fig. 2**: zeigt eine zweite Ausführungsform des erfindungsgemäßen DC/DC-Wandlers, und
- **Fig. 3**: zeigt eine gegenüber der Ausführungsform gemäß Fig. 2 erweiterte Ausführungsform des erfindungsgemäßen DC/DC-Wandlers, wobei hier eingangsseitig mehrere Photovoltaikgeneratoren und eine Batterie und ausgangsseitig ein in ein Wechselspannungsnetz einspeisender Wechselrichter angeschlossen sind.

### FIGURENBESCHREIBUNG

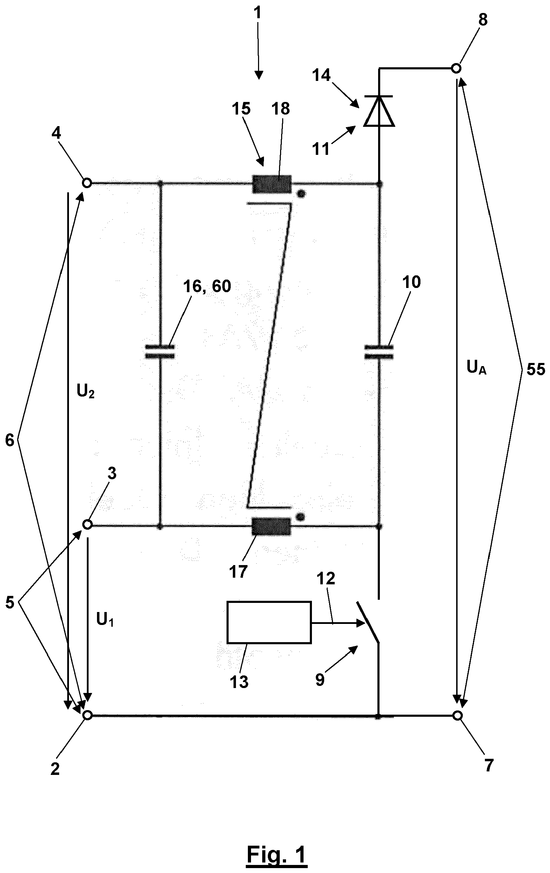

Der in **Fig. 1** gezeigte DC/DC-Wandler 1 weist einen ersten Niederspannungsanschlusspunkt 2, einen zweiten Niederspannungsanschlusspunkt 3 und einen dritten Niederspannungsanschlusspunkt 4 auf. Der zweite Niederspannungsanschlusspunkt 3 und der dritte Niederspannungsanschlusspunkt 4 bilden einen ersten Niederspannungsanschluss 5 für eine erste Niedergleichspannung U₁. Der erste Niederspannungsanschlusspunkt 2 und der dritte Niederspannungsanschlusspunkt 4 bilden einen zweiten Niederspannungsanschluss 6 für eine zweite Niedergleichspannung U₂. Ein erster Hochspannungsanschlusspunkt 7 und ein zweiter Hochspannungsanschlusspunkt 8 des DC/DC-Wandlers 1 bilden einen Hochspannungsanschluss 55 für eine Hochgleichspannung U_{A}. Der erste Niederspannungsanschlusspunkt 2 ist direkt mit dem ersten Hochspannungsanschlusspunkt 7 verbunden. Zwischen dem Hochspannungsanschlusspunkt 7 und dem zweiten Hochspannungsanschlusspunkt 8 sind ein aktiv ansteuerbares Schaltelement 9, ein Kondensator 10 und ein weiteres Schaltelement 11 in Reihe geschaltet. Das aktiv ansteuerbare Schaltelement 9 ist mit einem Ansteuersignal 12 von einer Steuerung 13 ansteuerbar, um den Kondensator 10 einseitig vorübergehend mit dem ersten Hochspannungsanschlusspunkt 7 zu verbinden. Das weitere Schaltelement 11 ist hier eine Diode 14, die immer dann sperrt, wenn das aktiv ansteuerbare Schaltelement 9 geschlossen wird. Der Kondensator 10 ist weiterhin zwischen den zweiten Niederspannungsanschlusspunkt 3 und den dritten Niederspannungsanschlusspunkt 4 geschaltet, aber nicht direkt, sondern unter Zwischenordnung von Drosseln 17, 18 mit einer magnetischen Kopplung 15. Hingegen ist eine weitere Kapazität 16, hier in Form eines weiteren Kondensators 60, direkt zwischen den zweiten Niederspannungsanschlusspunkt 3 und den dritten Niederspannungsanschlusspunkt 4 geschaltet. Die beiden Kondensatoren 10 und 60 sind so zwar grundsätzlich parallel zueinander geschaltet, dabei aber durch die Drosseln 17, 18 entkoppelt. Die Art der magnetischen Kopplung 15 der Drosseln 17, 18 entspricht derjenigen einer stromkompensierten Drossel. Das heißt, die gekoppelten Drosseln 17, 18 weisen eine geringe Induktivität für Gegentaktströme und eine hohe Induktivität für Gleichtaktströme zwischen den Kondensatoren 10 und 60 auf. Auf diese Weise werden Potentialsprünge, die an dem Kondensator 10 beim Ansteuern des Schaltelementes 9 auftreten, von dem weiteren Kondensator 60 ferngehalten, gleichzeitig aber Spannungsunterschiede zwischen den beiden Kondensatoren 10 und 60 sofort ausgeglichen, da der Ausgleichsstrom ein Gegentaktstrom ist, dem die gekoppelten Drosseln 17, 18 praktisch keine Impedanz entgegensetzen. Es versteht sich, dass dabei die tatsächlich bewirkte Spannungskopplung wie auch die Potentialentkopplung der Kondensatoren 10 und 60 von der Auslegung der Drosseln 17, 18 und ihrer magnetischen Kopplung 15 abhängt, insbesondere der Streuinduktivität. Sie hängt zudem von den Eigenschaften einer die Niedergleichspannung U₁ bereitstellenden Gleichspannungsquelle ab.

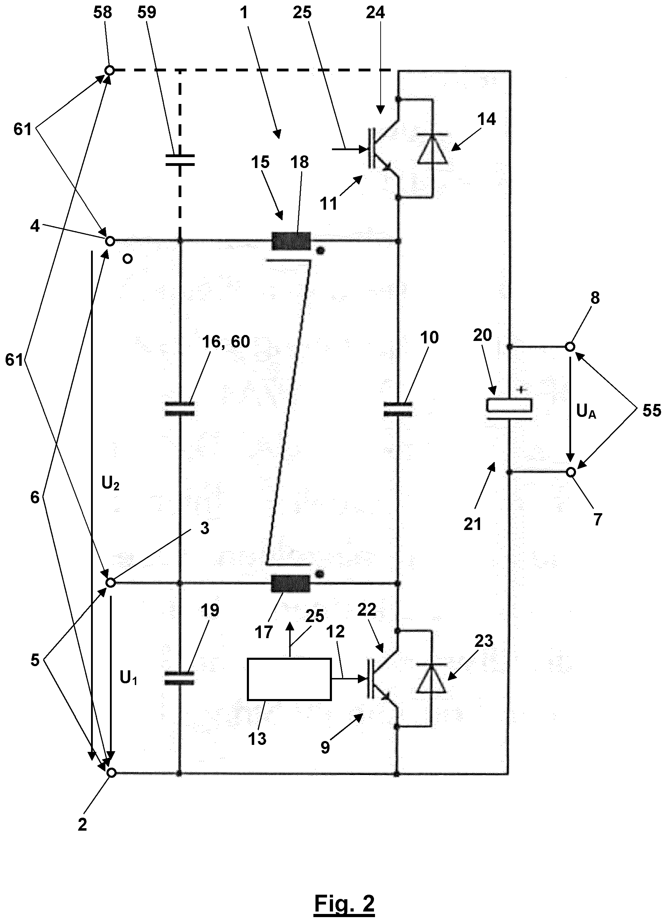

Die Ausführungsform des erfindungsgemäßen DC/DC-Wandlers 1 gemäß **Fig.** 2 ist gegenüber der Ausführungsform gemäß Fig. 1 um weitere Komponenten ergänzt bzw. in folgenden Details spezifiziert. Zwischen den ersten Niederspannungsanschlusspunkt 2 und den zweiten Niederspannungsanschlusspunkt 3 ist ein Stützkondensator 19 geschaltet, der von der ersten Niedergleichspannung U₁ aufgeladen wird und der diese Niedergleichspannung U₁ so stabilisiert, dass sich die weitere Kapazität 16 bezüglich des elektrischen Potentials an dem Eingangsanschlusspunkt 3 an ihm abstützen kann. Auf diese Weise wird die Entkopplung der weiteren Kapazität 16 durch die magnetisch gekoppelten Drosseln 17, 18 von dem Kondensator 10 gestützt. Zwischen die Hochspannungsanschlusspunkte 7 und 8 ist ein Zwischenkreiskondensator 20 geschaltet, der die Hochgleichspannung U_{A} stabilisiert und einen Spannungszwischenkreis 21 ausbildet. Das aktiv ansteuerbare Schaltelement 9 ist hier als Halbleiterschalter, konkret als Transistor 22 mit Inversdiode 23 ausgebildet. Auch das weitere Schaltelement 11 ist hier ein aktiv ansteuerbares Schaltelement 24 in Form eines Transistors 24, dessen Inversdiode die Diode 14 ausgebildet. Das aktiv ansteuerbare Schaltelement 24 ist über ein weiteres Ansteuersignal 25 von der Steuerung 13 ansteuerbar. Auf diese Weise ist der DC/DC-Wandler 1 bidirektional betreibbar, und die weitere Kapazität 16 kann über den Kondensator 10 aus dem Spannungszwischenkreis 21 aufgeladen werden.

Das aktiv ansteuerbare Schaltelement 9 und das weitere Schaltelement 11 müssen bei dem erfindungsgemäßen DC/DC-Wandler 1 nicht für die volle Hochgleichspannung U_{A} ausgelegt werden, sondern nur für die Differenz zwischen der Hochgleichspannung U_{A} und der über dem Kondensator 10 abfallenden Spannung. Die Niedergleichspannungen U₁ und U₂ können beispielsweise durch zwei verschiedene Photovoltaikgeneratoren bereitgestellt werden. Sinnvoller Weise ist die Niedergleichspannung U₂ immer größer als die Niedergleichspannung U₁.

Fig. 2 zeigt mit gestrichelten Linien einen optionalen zusätzlichen Niederspannungsanschlusspunkt 58, der direkt mit dem zweiten Hochspannungsanschlusspunkt 8 verbunden ist und über einen zusätzlichen Stützkondensator 59 mit dem dritten Niederspannungsanschlusspunkt 4. Auf diese Weise werden ein dritter und ein vierter Niederspannungsanschluss 61 bzw. 62 mit anderem Bezugspotential bereitgestellt, an die alternative oder zusätzliche Gleichspannungsquellen angeschlossen werden können.

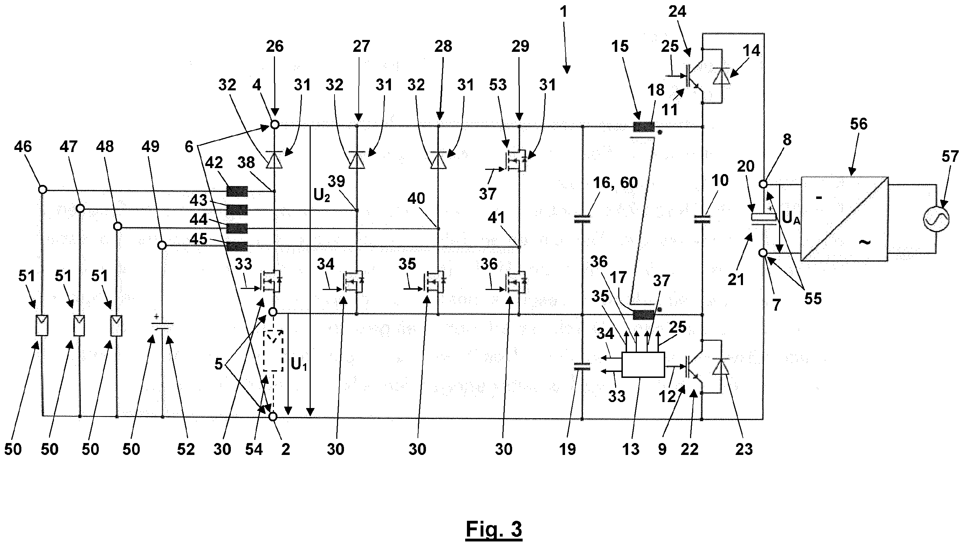

Die Ausführungsform des DC/DC-Wandlers 1 gemäß **Fig. 3** unterscheidet sich von derjenigen gemäß Fig. 2 dadurch, dass parallel zu der weiteren Kapazität 16 mehrere Halbbrücken 26 bis 29 zwischen die Niederspannungsanschlusspunkte 3 und 4 geschaltet sind, die jeweils aus einem aktiv ansteuerbaren Brückenschaltelement 30 und einem weiteren Brückenschaltelement 31 bestehen. Im Falle der Halbbrücken 26 bis 28 ist das weitere Brückenschaltelement 31 eine Diode 32. Bei der Halbbrücke 29 ist das weitere Brückenschaltelement 31 ein weiteres aktiv ansteuerbares Brückenschaltelement 53. Die aktiv ansteuerbaren Brückenschaltelemente 30 und 53 werden von der Steuerung 13 mit Steuersignalen 33 bis 37 angesteuert. An Mittelpunkte 38 bis 41 der Halbbrücken 26 bis 29 sind Eingangsdrosseln 42 bis 45 angeschlossen, die zu weiteren Niederspannungsanschlusspunkten 46 bis 49 führen. Zwischen den ersten Niederspannungsanschlusspunkt 2 und jeden der weiteren Niederspannungsanschlusspunkte 46 bis 49 ist eine Gleichspannungsquelle 50 geschaltet. Dabei handelt es sich im Falle der weiteren Niederspannungsanschlusspunkte 46 bis 48 um jeweils einen Photovoltaikgenerator 51 und im Falle des weiteren Niederspannungsanschlusspunkts 49 um eine Batterie 52. Dies bedeutet, dass die Batterie 52 über die Halbbrücke 29 mit den zwei aktiv ansteuerbaren Brückenschaltelementen 30 und 53 an den zweiten Niederspannungsanschlusspunkt 3 und den dritten Niederspannungsanschlusspunkt 4 angeschlossen ist, während die Photovoltaikgeneratoren 51 jeweils über eine der Halbbrücken 26 bis 28 mit dem aktiv ansteuerbaren Brückenschaltelement 30 und der Diode 32 an diese Niederspannungsanschlusspunkte 3 und 4 angeschlossen ist. Durch Ansteuern der Brückenschaltelemente 30 der Halbbrücken 26 bis 28 können bei passenden Niedergleichspannungen U₁ und U₂ die Betriebsspannungen der einzelnen Photovoltaikgeneratoren 51 beispielsweise im Sinne eines MPP-Tracking eingestellt werden. Dabei wird die jeweilige Halbbrücke 26 bis 28 in Verbindung mit der zugehörigen Eingangsdrossel 42 bis 44 als Hochsetzsteller betrieben. Die Ansteuerung der Brückenschaltelemente 30 und 53 der Halbbrücke 29 bestimmt, ob die Batterie 52 geladen oder entladen wird, was davon abhängig ist, ob die an dem weiteren Niederspannungsanschlusspunkt 49 eingestellte Spannung eine Lade- oder eine Entladespannung für die Batterie 52 darstellt. Mit Hilfe des aktiv ansteuerbaren Schaltelements 24, das mit dem Kondensator 10 in Reihe geschaltet ist, kann die Batterie 52 auch aus dem Hochgleichspannungszwischenkreis 21 geladen werden. Ein zusätzlicher mit gestrichelten Linien dargestellter Photovoltaikgenerator 54 kann direkt zwischen die Niederspannungsanschlusspunkte 2 und 3 geschaltet sein. Ebenso kann ein hier nicht dargestellter zusätzlicher Photovoltaikgenerator direkt zwischen die Niederspannungsanschlusspunkte 2 und 4 geschaltet sein. Die Eingangsdrosseln 42 bis 45 können sehr kleine Induktivitäten aufweisen, so dass sie Leiterplatten-montierbar sind, weil sie als Hochsetzstellerdrosseln in Verbindung mit den Halbbrücken 26 bis 29 nur mit Anteilen der Niedergleichspannungen belastet werden. Diese Anteile bleiben klein, wenn zwischen den Gleichspannungsquellen 50 nur kleine Spannungsunterschiede bestehen. An den Hochspannungsanschluss 55 des DC/DC-Wandlers 1 ist hier ein DC/AC-Wandler 56 angeschlossen, der die Hochgleichspannung U_{A} wechselrichtet, um elektrische Energie aus dem Spannungszwischenkreis 21 in ein Wechselspannungsnetz 57 einzuspeisen. Die in Fig. 3 insgesamt dargestellte elektrische Schaltung ist diejenige eines Wechselrichters mit dem DC/AC-Wandler 56, dem der erfindungsgemäße DC/DC-Wandler vorgeschaltet ist.

Ohne dass dies unter die Patentansprüche fällt, wird hier auch eine Abwandlung des in Fig. 3 dargestellten DC/DC-Wandlers 1 als eigenständige Erfindung offenbart, bei der die Drosseln 17 und 18 zwischen dem Kondensator 10 und der weiteren Kapazität 16 nicht vorhanden sind und bei der der Kondensator 10 und die weitere Kapazität 16 zu einem einzigen Kondensator zusammengefasst sein können. Der DC/DC-Wandler 1 entspricht dann einem DC/DC-Wandler mit fliegendem Kondensator, bei dem dem fliegenden Kondensator mehrere Halbbrücken parallel geschaltet sind, um mehrere Gleichspannungsquellen mit unterschiedlichen Niedergleichspannungen anschließen zu können.

Bei diesem abgewandelten und dem erfindungsgemäßen DC/DC-Wandler 1 kann jedes der Schaltelemente 9 und 24 bei Bedarf in mehrere Teilschaltelemente aufgeteilt werden. Dann können zwischen diese Teilschaltelemente zusätzliche fliegende Kondensatoren geschaltet werden.

### BEZUGSZEICHENLISTE

- 1: DC/DC-Wandler
- 2: erster Niederspannungsanschlusspunkt
- 3: zweiter Niederspannungsanschlusspunkt
- 4: dritter Niederspannungsanschlusspunkt
- 5: erster Niederspannungsanschluss
- 6: zweiter Niederspannungsanschluss
- 7: erster Hochspannungsanschlusspunkt
- 8: zweiter Hochspannungsanschlusspunkt
- 9: aktiv ansteuerbares Schaltelement
- 10: Kondensator
- 11: weiteres Schaltelement
- 12: Ansteuersignal
- 13: Steuerung
- 14: Diode
- 15: magnetische Kopplung
- 16: weitere Kapazität
- 17: Drossel
- 18: Drossel
- 19: Stützkondensator
- 20: Zwischenkreiskondensator
- 21: Spannungszwischenkreis
- 22: Transistor
- 23: Inversdiode
- 24: aktiv ansteuerbares Schaltelement
- 25: Steuersignal
- 26: Halbbrücke
- 27: Halbbrücke
- 28: Halbbrücke
- 29: Halbbrücke
- 30: aktiv ansteuerbares Brückenschaltelement
- 31: weiteres Brückenschaltelement
- 32: Diode
- 34: Ansteuersignal
- 35: Ansteuersignal
- 36: Ansteuersignal
- 37: Ansteuersignal
- 38: Mittelpunkt
- 39: Mittelpunkt
- 40: Mittelpunkt
- 41: Mittelpunkt
- 42: Eingangsdrossel
- 43: Eingangsdrossel
- 44: Eingangsdrossel
- 45: Eingangsdrossel
- 46: weiterer Niederspannungsanschlusspunkt
- 47: weiterer Niederspannungsanschlusspunkt
- 48: weiterer Niederspannungsanschlusspunkt
- 49: weiterer Niederspannungsanschlusspunkt
- 50: Gleichspannungsquelle
- 51: Photovoltaikgenerator
- 52: Batterie
- 53: weiteres aktiv ansteuerbares Brückenschaltelement
- 54: Photovoltaikgenerator
- 55: Hochspannungsanschluss
- 56: DC/AC-Wandler
- 57: Wechselspannungsnetz
- 58: Niederspannungsanschlusspunkt
- 59: Stützkondensator
- 60: weiterer Kondensator
- 61: dritter Niederspannungsanschluss
- 62: vierter Niederspannungsanschluss
- U₁: erste Niedergleichspannung
- U₂: zweite Niedergleichspannung
- U_{A}: Hochgleichspannung

## Patentansprüche

1. DC/DC-Wandler (1) mit
- einem ersten Niederspannungsanschlusspunkt (2), einem zweiten Niederspannungsanschlusspunkt (3) und einem dritten Niederspannungsanschlusspunkt (4) sowie
- einem ersten Hochspannungsanschlusspunkt (7) und einem zweiten Hochspannungsanschlusspunkt (8),
- wobei der erste Niederspannungsanschlusspunkt (2) und der erste Hochspannungsanschlusspunkt (7) direkt miteinander verbunden sind,
- wobei ein aktiv ansteuerbares Schaltelement (9), ein Kondensator (10) und ein weiteres Schaltelement (11) zwischen dem ersten Hochspannungsanschlusspunkt (7) und dem zweiten Hochspannungsanschlusspunkt (8) in Reihe geschaltet sind und
- wobei der Kondensator (10) zwischen den zweiten Niederspannungsanschlusspunkt (3) und den dritten Niederspannungsanschlusspunkt (4) geschaltet ist,
**dadurch gekennzeichnet,**
- **dass** eine weitere Kapazität (16) direkt zwischen den zweiten Niederspannungsanschlusspunkt (3) und den dritten Niederspannungsanschlusspunkt (4) geschaltet ist und
- **dass** die weitere Kapazität (16) durch zwei Drosseln (17, 18) beidpolig von dem Kondensator (10) entkoppelt ist.

2. DC/DC-Wandler (1) nach Anspruch 1, **dadurch gekennzeichnet, dass** die beiden Drosseln (17, 18) nach Art einer stromkompensierten Drossel magnetisch gekoppelt sind.

3. DC/DC-Wandler (1) nach Anspruch 1 oder 2, **dadurch gekennzeichnet, dass** zwischen den ersten Niederspannungsanschlusspunkt (2) und den zweiten oder dritten Niederspannungsanschlusspunkt (3, 4) ein Stützkondensator (19) geschaltet ist.

4. DC/DC-Wandler (1) nach einem der vorhergehenden Ansprüche, **dadurch gekennzeichnet, dass** parallel zu der Reihenschaltung des aktiv ansteuerbaren Schaltelements (9), des Kondensators (10) und des weiteren Schaltelements (11) ein Zwischenkreiskondensator (20) zwischen den ersten Hochspannungsanschlusspunkt (7) und den zweiten Hochspannungsanschlusspunkt (8) geschaltet ist.

5. DC/DC-Wandler (1) nach einem der vorhergehenden Ansprüche, **dadurch gekennzeichnet, dass** zwischen den zweiten Niederspannungsanschlusspunkt (3) und den dritten Niederspannungsanschlusspunkt (4) mindestens eine Halbbrücke (26 bis 29) aus einem aktiv ansteuerbaren Brückenschaltelement (30) und einem weiteren Brückenschaltelement (31) geschaltet ist, wobei ein Mittelpunkt (38 bis 41) der Halbbrücke (26 bis 29) über eine Eingangsdrossel (42 bis 45) an einen weiteren Niederspannungsanschlusspunkt (46 bis 49) angeschlossen ist.

6. DC/DC-Wandler (1) nach einem der vorhergehenden Ansprüche, **dadurch gekennzeichnet, dass** das weitere Schaltelement (11) ein weiteres aktiv ansteuerbares Schaltelement (24) ist.

7. DC/DC-Wandler (1) nach einem der vorhergehenden Ansprüche, **dadurch gekennzeichnet, dass** ein zusätzlicher Niederspannungsanschlusspunkt (58) direkt mit dem zweiten Hochspannungsanschlusspunkt (8) verbunden ist.

8. Wechselrichter mit einem DC/AC-Wandler (56) und einem DC/DC-Wandler (1) nach einem der vorhergehenden Ansprüche, wobei der DC/AC-Wandler (56) an den Hochspannungsanschluss (55) des DC/DC-Wandlers (1) angeschlossen ist, sich aus der Hochgleichspannung (U_{A}) speist und in ein Wechselspannungsnetz (57) einspeist.

9. Elektrische Schaltung mit einem DC/DC-Wandler (1) nach einem der Ansprüche 1 bis 7 oder Wechselrichter nach Anspruch 8, **dadurch gekennzeichnet, dass** an den ersten Niederspannungsanschlusspunkt (2) einerseits und den zweiten Niederspannungsanschlusspunkt (3) andererseits sowie an den ersten Niederspannungsanschlusspunkt (2) einerseits und den zweiten Niederspannungsanschlusspunkt (3) andererseits jeweils eine Gleichspannungsquelle direkt angeschlossen ist.

10. Elektrische Schaltung mit einem DC/DC-Wandler (1) nach Anspruch 5 oder Wechselrichter nach Anspruch 8 mit einem DC/DC-Wandler (1) nach Anspruch 5, **dadurch gekennzeichnet, dass** an den ersten Niederspannungsanschlusspunkt (2) einerseits und den weiteren Niederspannungsanschlusspunkt (46 bis 49) andererseits eine Gleichspannungsquelle (50) angeschlossen ist.

11. Elektrische Schaltung oder Wechselrichter nach Anspruch 10, **dadurch gekennzeichnet, dass** die Gleichspannungsquelle (50) ein Photovoltaikgenerator (51) ist, wobei das weitere Brückenschaltelement (31) eine Diode (32) ist.

12. Elektrische Schaltung oder Wechselrichter nach Anspruch 10, **dadurch gekennzeichnet, dass** die Gleichspannungsquelle (50) eine Batterie (52) und/oder ein anderer Speicher für elektrische Energie ist, wobei das weitere Brückenschaltelement (31) ein weiteres aktiv ansteuerbares Brückenschaltelement (53) ist.

13. Elektrische Schaltung mit einem DC/DC-Wandler (1) nach Anspruch 5 oder Wechselrichter nach Anspruch 8 mit einem DC/DC-Wandler (1) nach Anspruch 5, **dadurch gekennzeichnet, dass** zwischen den zweiten Eingangsanschlusspunkt (3) und den dritten Eingangsanschlusspunkt (4) mindestens zwei Halbbrücken (26 bis 29) aus jeweils einem aktiv ansteuerbaren Brückenschaltelement (30) und einem weiteren Brückenschaltelement (31) geschaltet sind, wobei der Mittelpunkt (38 bis 41) der jeweiligen Halbbrücke (26 bis 29) über eine Eingangsdrossel (42 bis 45) an jeweils einen weiteren Eingangsanschlusspunkt (46 bis 49) angeschlossen ist und wobei an den ersten Niederspannungsanschlusspunkt (2) einerseits und den weiteren Niederspannungsanschlusspunkt (46 bis 49) andererseits jeweils eine Gleichspannungsquelle (50) angeschlossen ist.

14. Elektrische Schaltung oder Wechselrichter nach Anspruch 13, **dadurch gekennzeichnet, dass** mindestens zwei der Gleichspannungsquellen (50) unterschiedliche Photovoltaikgeneratoren (51) sind.

15. Elektrische Schaltung oder Wechselrichter nach Anspruch 13 oder 14, **dadurch gekennzeichnet, dass** die Gleichspannungsquellen (50) eine Batterie (52) und/oder einen anderen Speicher für elektrische Energie umfassen.

## Claims

1. A DC/DC converter (1) comprising
- a first low-voltage terminal point (2), a second low-voltage terminal point (3) and a third low-voltage terminal point (4), and
- a first high-voltage terminal point (7) and a second high-voltage terminal point (8),
- wherein the first low-voltage terminal point (2) and the first high-voltage terminal point (7) are directly connected to one another,
- wherein an actively drivable switching element (9), a capacitor (10) and a further switching element (11) are connected in series between the first high-voltage terminal point (7) and the second high-voltage terminal point (8), and
- wherein the capacitor (10) is connected between the second low-voltage terminal point (3) and the third low-voltage terminal point (4),
**characterized**
- **in that** a further capacitance (16) is directly connected between the second low-voltage terminal point (3) and the third low-voltage terminal point (4), and
- **in that** the further capacitance (16) is decoupled from the capacitor (10) at both poles by two inductors (17, 18).

2. The DC/DC converter (1) as claimed in claim 1, **characterized in that** the two inductors (17, 18) are magnetically coupled in the manner of a current-compensated inductor.

3. The DC/DC converter (1) as claimed in claim 1 or 2, **characterized in that** a stabilizing capacitor (19) is connected between the first low-voltage terminal point (2) and the second or third low-voltage terminal point (3, 4).

4. The DC/DC converter (1) as claimed in any of the preceding claims, **characterized in that** in parallel with the series connection of the actively drivable switching element (9), the capacitor (10) and the further switching element (11), a link capacitor (20) is connected between the first high-voltage terminal point (7) and the second high-voltage terminal point (8).

5. The DC/DC converter (1) as claimed in any of the preceding claims, **characterized in that** at least one half-bridge (26 to 29) comprising an actively drivable bridge switching element (30) and a further bridge switching element (31) is connected between the second low-voltage terminal point (3) and the third low-voltage terminal point (4), wherein a center point (38 to 41) of the half-bridge (26 to 29) is connected to a further low-voltage terminal point (46 to 49) via an input inductor (42 to 45).

6. The DC/DC converter (1) as claimed in any of the preceding claims, **characterized in that** the further switching element (11) is a further actively drivable switching element (24).

7. The DC/DC converter (1) as claimed in any of the preceding claims, **characterized in that** an additional low-voltage terminal point (58) is directly connected to the second high-voltage terminal point (8).

8. An inverter comprising a DC/AC converter (56) and a DC/DC converter (1) as claimed in any of the preceding claims, wherein the DC/AC converter (56) is connected to the high-voltage terminal (55) of the DC/DC converter (1), is fed from the high DC voltage (UA) and feeds into an AC voltage grid (57).

9. An electrical circuit comprising a DC/DC converter (1) as claimed in any of claims 1 to 7 or the inverter as claimed in claim 8, **characterized in that** a DC voltage source is directly connected to each of the first low-voltage terminal point (2), on the one hand, and the second low-voltage terminal point (3), on the other hand, and also to the first low-voltage terminal point (2), on the one hand, and the second low-voltage terminal point (3), on the other hand, respectively.

10. An electrical circuit comprising a DC/DC converter (1) as claimed in claim 5 or the inverter as claimed in claim 8 comprising a DC/DC converter (1) as claimed in claim 5, **characterized in that** a DC voltage source (50) is connected to the first low-voltage terminal point (2), on the one hand, and the further low-voltage terminal point (46 to 49), on the other hand.

11. The electrical circuit or the inverter as claimed in claim 10, **characterized in that** the DC voltage source (50) is a photovoltaic generator (51), wherein the further bridge switching element (31) is a diode (32).

12. The electrical circuit or the inverter as claimed in claim 10, **characterized in that** the DC voltage source (50) is a battery (52) and/or some other store for electrical energy, wherein the further bridge switching element (31) is a further actively drivable bridge switching element (53).

13. An electrical circuit comprising a DC/DC converter (1) as claimed in claim 5 or the inverter as claimed in claim 8 comprising a DC/DC converter (1) as claimed in claim 5, **characterized in that** at least two half-bridges (26 to 29) each comprising an actively drivable bridge switching element (30) and a further bridge switching element (31) are connected between the second input terminal point (3) and the third input terminal point (4), wherein the center point (38 to 41) of the respective half-bridge (26 to 29) is connected respectively to a further input terminal point (46 to 49) via an input inductor (42 to 45) and wherein a DC voltage source (50) is connected to each of the first low-voltage terminal point (2), on the one hand, and the further low-voltage terminal point (46 to 49) on the other hand.

14. The electrical circuit or the inverter as claimed in claim 13, **characterized in that** at least two of the DC voltage sources (50) are different photovoltaic generators (51).

15. The electrical circuit or the inverter as claimed in claim 13 or 14, **characterized in that** the DC voltage sources (50) comprise a battery (52) and/or some other store for electrical energy.

## Revendications

1. Convertisseur CC/CC (1) avec
- un premier point de connexion à basse tension (2), un deuxième point de connexion à basse tension (3) et un troisième point de connexion à basse tension (4), ainsi que
- un premier point de connexion à haute tension (7) et un deuxième point de connexion à haute tension (8),
- le premier point de connexion à basse tension (2) et le premier point de connexion à haute tension (7) étant directement reliés entre eux,
- un élément de connexion (9) pouvant être activement commandé, un condensateur (10) et un deuxième élément de commutation (11) étant montés en série entre le premier point de connexion à haute tension (7) et le deuxième point de connexion à haute tension (8), et
- le condensateur (10) étant connecté entre le deuxième point de connexion à basse tension (3) et le troisième point de connexion à basse tension (4),
**caractérisé en ce que**
- une autre capacité (16) est directement connectée entre le deuxième point de connexion à basse tension (3) et le troisième point de connexion à basse tension (4), et
- l'autre capacité (16) est découplée de façon bipolaire du condensateur (10) par deux bobines de réactance (17, 18).

2. Convertisseur CC/CC (1) selon la revendication 1, **caractérisé en ce que** les deux bobines de réactance (17, 18) sont couplées magnétiquement à la manière d'une bobine de réactance à compensation de courant.

3. Convertisseur CC/CC (1) selon la revendication 1 ou 2, **caractérisé en ce qu'**un condensateur de soutien (19) est connecté entre le premier point de connexion à basse tension (2) et le deuxième et le troisième point de connexion à basse tension (3, 4).

4. Convertisseur CC/CC (1) selon l'une quelconque des revendications précédentes, **caractérisé en ce qu'**un condensateur de circuit intermédiaire (20) est connecté entre le premier point de connexion à haute tension (7) et le deuxième point de connexion à haute tension (8) parallèlement au montage en série de l'élément de commutation pouvant être activement commandé (9), du condensateur (10) et de l'autre élément de commutation (11).

5. Convertisseur CC/CC (1) selon l'une quelconque des revendications précédentes, **caractérisé en ce qu'**au moins un demi-pont (26 à 29) d'un élément de commutation de pont pouvant être activement commandé (30) et d'un autre élément de commutation de pont (31) est connecté entre le deuxième point de connexion à basse tension (3) et le troisième point de connexion à basse tension (4), un point central (38 à 41) du demi-pont (26 à 29) étant raccordé par le biais d'une bobine de réactance d'entrée (42 à 45) à un autre point de connexion à basse tension (46 à 49).

6. Convertisseur CC/CC (1) selon l'une quelconque des revendications précédentes, **caractérisé en ce que** l'autre élément de commutation (11) est un autre élément de commutation pouvant être activement commandé (24).

7. Convertisseur CC/CC (1) selon l'une quelconque des revendications précédentes, **caractérisé en ce qu'**un point de connexion à basse tension supplémentaire (58) est directement relié au deuxième point de connexion à basse tension (8).

8. Onduleur avec convertisseur CC/CA (56) et un convertisseur CC/CC (1) selon l'une quelconque des revendications précédentes, le convertisseur CC/CA (56) étant raccordé à la connexion à haute tension (55) du convertisseur CC/CC (1), s'alimente à partir de la haute tension continue (U_{A}) et alimente un réseau à tension alternative (57).

9. Circuit électrique avec un convertisseur CC/CC (1) selon l'une quelconque des revendications 1 à 7 ou onduleur selon la revendication 8, **caractérisé en ce qu'**une source de tension continue est respectivement directement connectée au premier point de connexion à basse tension (2) d'une part et au deuxième point de connexion à basse tension (3) d'autre part ainsi qu'au premier point de connexion à basse tension (2) d'une part et au deuxième point de connexion à basse tension (3) d'autre part.

10. Circuit électrique avec un convertisseur CC/CC (1) selon la revendication 5 ou onduleur selon la revendication 8 avec un convertisseur CC/CC (1) selon la revendication 5, **caractérisé en ce qu'**une source de tension continue (50) est connectée au premier point de connexion à basse tension (2) d'une part et à l'autre point de connexion à basse tension (46 à 49) d'autre part.

11. Circuit électrique ou onduleur selon la revendication 10, **caractérisé en ce que** la source de tension continue (50) est un générateur photovoltaïque (51), l'autre élément de commutation de pont (31) étant une diode (32).

12. Circuit électrique ou onduleur selon la revendication 10, **caractérisé en ce que** la source de tension continue (50) est une batterie (52) et/ou un autre accumulateur pour énergie électrique, l'autre élément de commutation de pont (31) est un autre élément de commutation de pont (53) pouvant être activement commandé.

13. Circuit électrique avec un convertisseur CC/CC (1) selon la revendication 5 ou onduleur selon la revendication 8 avec un convertisseur CC/CC (1) selon la revendication 5, **caractérisé en ce qu'**au moins deux demi-ponts (26 à 29) sont connectés à partir respectivement d'un élément de commutation de pont pouvant être activement commandé (30) et d'un autre élément de commutation de pont (31) entre le deuxième point de connexion d'entrée (3) et le troisième point de connexion d'entrée (4), le point central (38 à 41) du demi-pont respectif (26 à 29) étant raccordé par le biais d'une bobine de réactance d'entrée (42 à 45) à respectivement un autre point de connexion d'entrée (46 à 49) et une source de tension continue (50) étant respectivement raccordée au premier point de connexion à basse tension (2) d'une part et à l'autre point de connexion à basse tension (46 à 49) d'autre part.

14. Circuit électrique ou onduleur selon la revendication 13, **caractérisé en ce qu'**au moins deux sources de tension continue (50) sont des générateurs photovoltaïques (51) différents.

15. Circuit électrique ou onduleur selon la revendication 13 ou 14, **caractérisé en ce que** les sources de tension continue (50) comprennent une batterie (52) et/ou un autre accumulateur pour l'énergie électrique.
